# EUROPEAN PATENT APPLICATION

(11) **EP 2 566 249 A1**
(43) Date of publication of application: **06.03.2013**
(21) Application number: 11775123.0
(22) Date of filing: 28.04.2011
(51) Int. Cl.: H04W 48/06, H04W 28/08, H04W 36/14

(54) **MOBILE COMMUNICATION SYSTEM AND RADIO ACCESS NETWORK APPARATUS**

(30) Priority: 30.04.2010 JP 2010105684
(71) Applicant: NTT DOCOMO, INC., Chiyoda-ku Tokyo 100-6150 (JP)
(72) Inventor: TAKAHASHI, Hideaki, Tokyo 100-6150 (JP); NAKAMURA, Yuichiro, Tokyo 100-6150 (JP); AOYAGI, Kenichiro, Tokyo 100-6150 (JP); UCHIYAMA, Tadashi, Tokyo 100-6150 (JP); ISHII, Minami, Tokyo 100-6150 (JP)
(74) Representative: HOFFMANN EITLE
(86) International application number: PCT/JP2011/060400
(87) International publication number: WO 2011/136342

(57) **Abstract**

Provided is a mobile communication system wherein a radio base station eNB in E-UTRAN is configured to transmit barring information for each communication type applied in the E-UTRAN to a radio network controller RNC in UTRAN, and the barring information includes a barring factor, a barring time, and information indicating whether there is any barring to a priority call.

## Description

### [Technical Field]

The present invention relates to a mobile communication system and a radio access network apparatus.

### [Background Art]

3GPP discusses, as a function of "SON (Self Configuration and Self Organization)", to exchange load information (Resource Status) in each cell between different types of RAT (Radio Access Technology).

For example, it is discussed to exchange load information in each cell between E-UTRAN (Evolved Universal Terrestrial Radio Access Network) and UTRAN (Universal Terrestrial Radio Access Network).

Furthermore, in order to perform load distribution, it is possible for a radio base station eNB (or a radio network controller RNC in the UTRAN) in the E-UTRAN to allow a mobile station UE in a cell subordinate to the radio base station eNB to be transited to a UTRAN cell (or an E-UTRAN cell) on the basis of the load information.

### [Summary of Invention]

### [Technical Problem]

However, the aforementioned mobile communication system has a problem that even when the radio base station eNB (or the radio network controller RNC in the UTRAN) in the E-UTRAN determined to allow the mobile station UE in the cell subordinate to the radio base station eNB to be transited to the UTRAN cell (or the E-UTRAN cell) on the basis of the load information, if access barring is done in the UTRAN cell (or the E-UTRAN cell), then the mobile station UE fails to be transited to the cell, or the mobile station UE may not be able to perform desired communication in a transition destination cell.

Therefore, the present invention has been achieved in view of the above-described problems, and an object thereof is to provide a mobile communication system and a radio access network apparatus, by which it is possible to exchange effective barring information between different types of RAT in order to perform load distribution.

### [Solution to Problem]

A first characteristic of the present embodiment is summarized in that a mobile communication system includes a first radio access network, and a second radio access network, wherein a radio access network apparatus in the first radio access network is configured to transmit barring information for each communication type applied in the first radio access network to a radio access network apparatus in the second radio access network, and the barring information includes a barring factor, a barring time, and information indicating whether there is any barring to a priority call.

A second characteristic of the present embodiment is summarized in that a radio access network apparatus in a first radio access network is configured to transmit barring information for each communication type applied in the first radio access network to a radio access network apparatus in a second radio access network, wherein the barring information includes a barring factor, a barring time, and information indicating whether there is any barring to a priority call.

A third characteristic of the present embodiment is summarized in that a mobile communication system includes a first radio access network, and a second radio access network, wherein a radio access network apparatus in the second radio access network is configured to transmit barring information applied in the second radio access network to a radio access network apparatus in the first radio access network, and the barring information includes information indicating whether there is any barring to each access class in a circuit switched domain and a packet switched domain.

A fourth characteristic of the present embodiment is summarized in that a radio access network apparatus in a second radio access network is configured to transmit barring information applied in the second radio access network to a radio access network apparatus in a first radio access network, wherein the barring information includes information indicating whether there is any barring to each access class in a circuit switched domain and a packet switched domain.

### [Advantageous Effects of Invention]

As described above, according to the present invention, it is possible to provide a mobile communication system and a radio access network apparatus, by which it is possible to exchange effective barring information between different types of RAT in order to perform load distribution.

### [Brief Description of Drawings]

[Fig. 1] Fig. 1 is a diagram showing the entire configuration of a mobile communication system according to a first embodiment of the present invention.
[Fig. 2] Fig. 2 is a diagram showing a protocol stack of the mobile communication system according to the first embodiment of the present invention.
[Fig. 3] Fig. 3 is a sequence diagram illustrating an operation of the mobile communication system according to the first embodiment of the present invention.
[Fig. 4] Fig. 4 is a diagram for explaining barring information in E-UTRAN in the mobile communication system according to the first embodiment of the present invention.
[Fig. 5] Fig. 5 is a sequence diagram illustrating an operation of the mobile communication system according to the first embodiment of the present invention.
[Fig. 6] Fig. 6 is a sequence diagram illustrating an operation of the mobile communication system according to the first embodiment of the present invention.
[Fig. 7] Fig. 7 is a diagram for explaining barring information in UTRAN in the mobile communication system according to the first embodiment of the present invention.
[Fig. 8] Fig. 8 is a diagram for explaining barring information in UTRAN in the mobile communication system according to the first embodiment of the present invention.
[Fig. 9] Fig. 9 is a diagram for explaining barring information in UTRAN in the mobile communication system according to the first embodiment of the present invention.
[Fig. 10] Fig. 10 is a sequence diagram illustrating an operation of the mobile communication system according to the first embodiment of the present invention.

### [Description of Embodiments]

### (Mobile communication system according to first embodiment of the present invention)

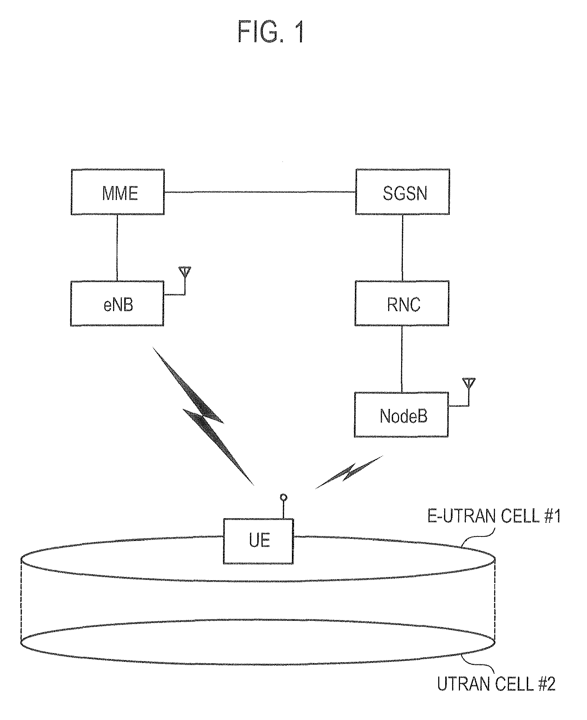

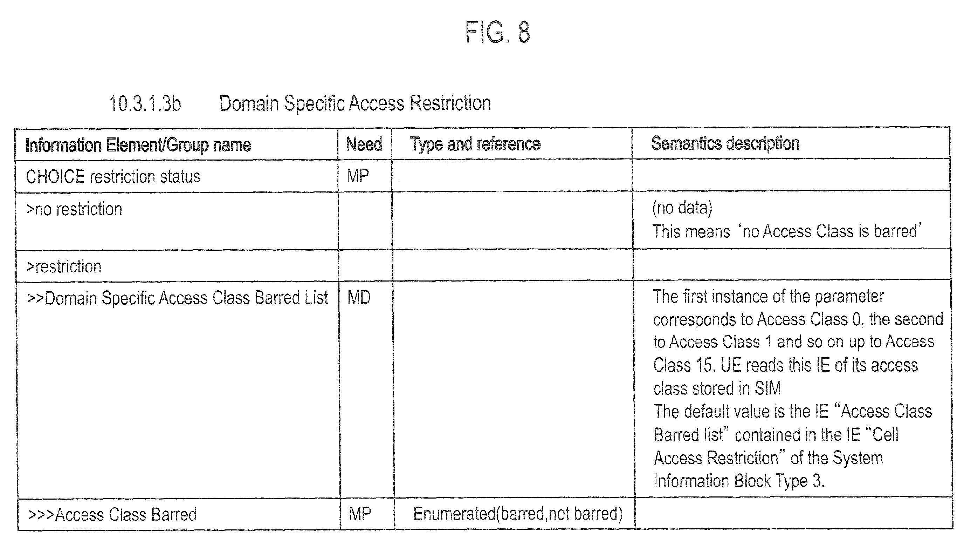

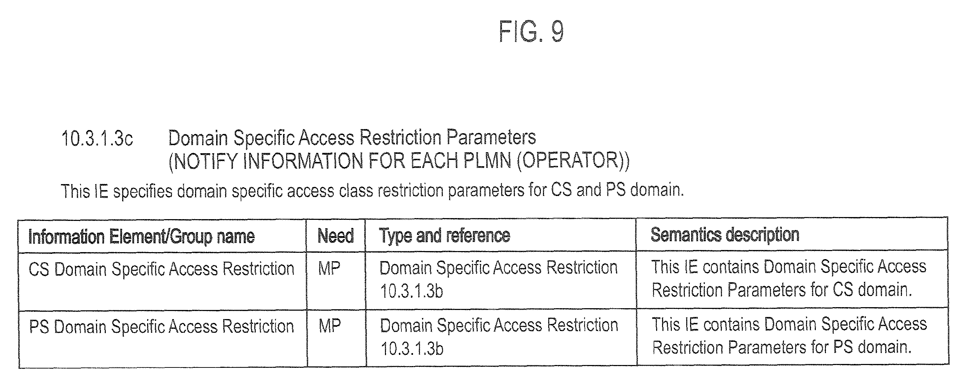

With reference to Fig. 1 to Fig. 10, the configuration of the mobile communication system according to the first embodiment of the present invention will be described.

As illustrated in Fig. 1, the mobile communication system according to the present embodiment includes E-UTRAN, a mobile network that accommodates the E-UTRAN, UTRAN, and a core network that accommodates the UTRAN.

A radio base station eNB is located in the E-UTRAN, a mobile management node MME is located in the mobile network, a radio base station NodeB and a radio network controller RNC are located in the UTRAN, and a packet switch SGSN is located in the core network.

In the example of Fig. 1, an E-UTRAN cell #1 subordinate to the radio base station eNB and a UTRAN cell #2 subordinate to the radio base station NodeB (the radio network controller RNC) are located to be geographically superposed.

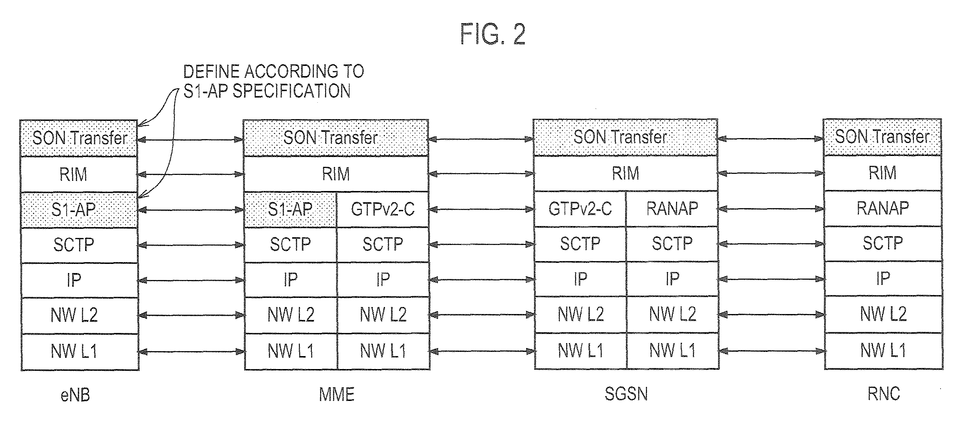

Fig. 2 is a diagram showing a protocol stack of the mobile communication system according to the present embodiment.

As illustrated in Fig. 2, as protocol functions, the radio base station eNB includes a NWL1 (Network Layer 1) function, a NWL2 (Network Layer 2) function, an IP (Internet Protocol) layer function, a SCTP (Stream Control Transmission Protocol) layer function, an S1-AP (S1 Application) layer function, a RIM (RAN Information Transfer) layer function, and an SON Transfer layer function.

Furthermore, as protocol functions, the mobile management node MME includes a NWL1 function, a NWL2 function, an IP layer function, a SCTP layer function, and an S1-AP layer function to a side of the radio base station eNB, includes a NWL1 function, a NWL2 function, an IP layer function, a SCTP layer function, and a GTP (GPRS Tunneling Protocol) v2-C layer function to a side of the packet switch SGSN, and further includes a RIM layer function and an SON Transfer layer function.

Furthermore, as protocol functions, the packet switch SGSN includes a NWL1 function, a NWL2 function, an IP layer function, a SCTP layer function, and a GTPv2-C layer function to a side of the mobile management node MME, includes a NWL1 function, a NWL2 function, an IP layer function, a SCTP layer function, and a RANAP (Radio Access Network Application Part) layer function to a side of the radio network controller RNC, and further includes a RIM layer function and an SON Transfer layer function.

Moreover, as protocol functions, the radio network controller RNC includes a NWL1 function, a NWL2 function, an IP layer function, a SCTP layer function, a RANAP layer function, a RIM layer function, and an SON Transfer layer function.

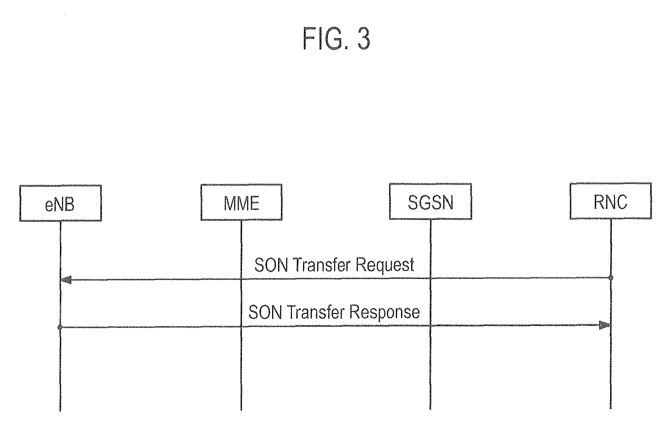

As illustrated in Fig. 3, as defined in TS36.413 of 3GPP, when "SON Transfer Request" is received from the radio network controller RNC, the radio base station eNB is configured to transmit "SON Transfer Response" to the radio network controller RNC.

Furthermore, the radio base station eNB is configured to transmit barring information "ac-BarringInfo" for each communication type applied in the E-UTRAN to the radio network controller RNC through the "SON Transfer Response".

Specifically, the barring information "ac-BarringInfo" includes a barring factor, a barring time, and information indicating whether there is any barring to a priority call.

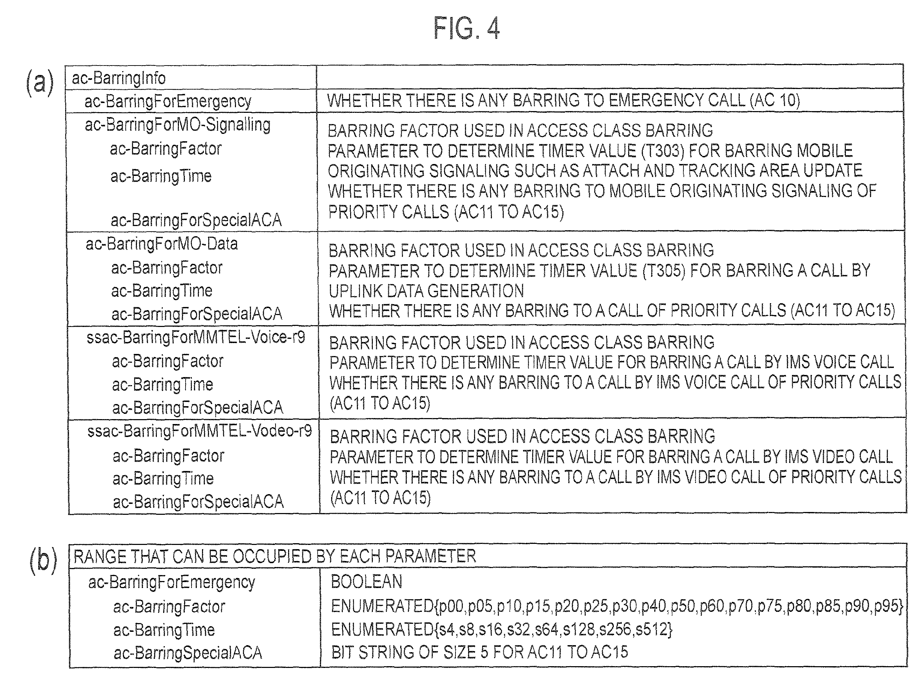

For example, as illustrated in Fig. 4 (a), the barring information "ac-Barringlnfo" includes "ac-BarringForEmergency", "ac-BarringForMO-Signalling", "ac-BarringForMO-Data", "ac-BarringForMMTEL-Voice-r9", "ac-BarringForMMTEL-Video-r9", and the like.

The information indicating whether there is any barring to an emergency call of an access class (AC) 10 is set in the "ac-BarringForEmergency".

The "ac-BarringForMO-Signalling" is barring information on a mobile originating signaling such as Attach or TAU, and includes a parameter "ac-BarringFactor" indicating a barring factor, a parameter "ac-BarringTime" indicating a barring time (a timer value T303), and a parameter "ac-BarringForSpecialACA" indicating whether there is any barring to a mobile originating signaling of priority calls (AC11 to AC15).

The "ac-BarringForMO-Data" is barring information on a call by uplink data generation, and includes the parameter "ac-BarringFactor" indicating the barring factor, the parameter "ac-BarringTime" indicating the barring time (a timer value T305), and the parameter "ac-BarringForSpecialACA" indicating whether there is any barring to the call of the priority calls (AC11 to AC15).

The "ac-BarringForMMTEL-Voice-r9" is barring information on a call by an IMS (IP Multimedia Subsystem) voice call, and includes the parameter "ac-BarringFactor" indicating the barring factor, the parameter "ac-BarringTime" indicating the barring time (the timer value T305), and the parameter "ac-BarringForSpecialACA" indicating whether there is any barring to the call by IMS voice calls of the priority calls (AC11 to AC15).

The "ac-BarringForMMTEL-Video-r9" is barring information on a call by an IMS video call, and includes the parameter "ac-BarringFactor" indicating the barring factor, the parameter "ac-BarringTime" indicating the barring time (the timer value T305), and the parameter "ac-BarringForSpecialACA" indicating whether there is any barring to the call by IMS video calls of the priority calls (AC11 to AC15).

Fig. 4 (b) illustrates an example of settable values to the parameters "ac-BarringFactor", "ac-BarringTime", and "ac-BarringForSpecialACA".

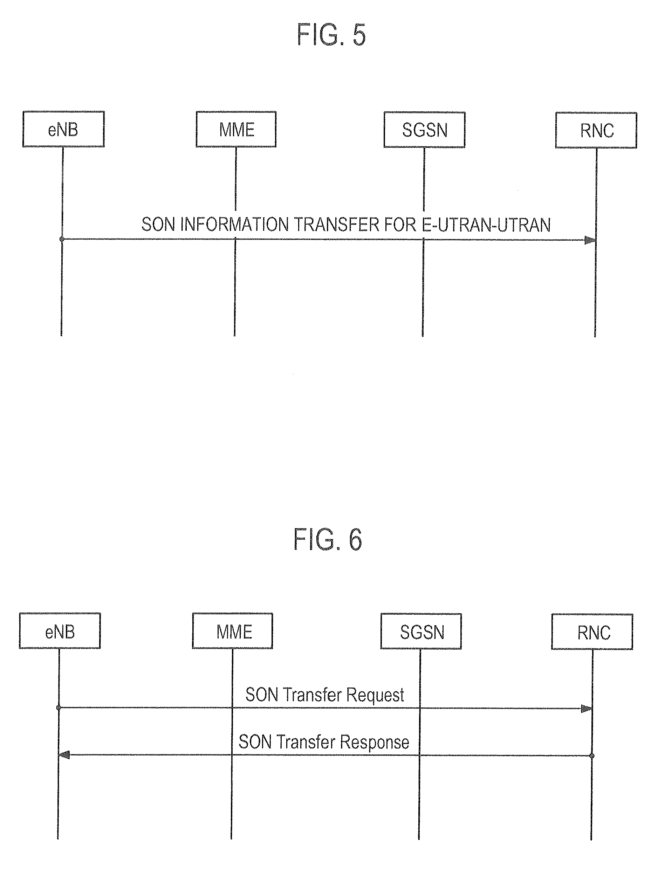

In addition, as illustrated in Fig. 5, the radio base station eNB may be configured to transmit the barring information "ac-BarringInfo" for each communication type applied in the E-UTRAN to the radio network controller RNC through an information element "MLB Information Transfer" in "SON Information Transfer for E-UTRAN-UTRAN".

Furthermore, as illustrated in Fig. 6, as defined in the TS36.413 of the 3GPP, when the "SON Transfer Request" is received from the radio base station eNB, the radio network controller RNC is configured to transmit the "SON Transfer Response" to the radio base station eNB.

Furthermore, the radio network controller RNC is configured to transmit barring information "Domain Specific Access Restriction" applied in the UTRAN to the radio base station eNB through the "SON Transfer Response".

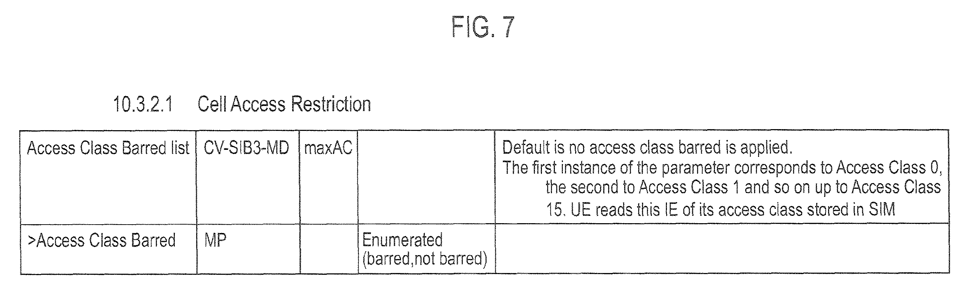

As illustrated in Figs. 7 to 9, the barring information "Domain Specific Access Restriction" indicates whether there is any barring to each access class in a CS (Circuit Switch) domain and a PS (Packet Switch) domain (refer to TS36.331 of the 3GPP).

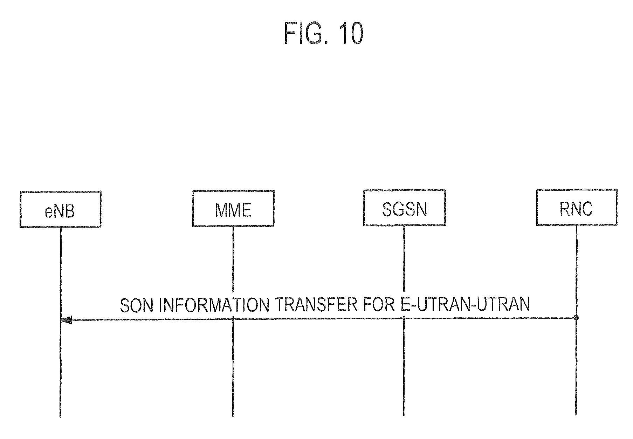

In addition, as illustrated in Fig. 10, the radio network controller RNC may be configured to transmit the barring information "Domain Specific Access Restriction" applied in the UTRAN to the radio base station eNB through the information element "MLB Information Transfer" in the "SON Information Transfer for E-UTRAN-UTRAN".

In accordance with the mobile communication system according to the present invention, the radio base station eNB is configured to transmit the barring information "ac-BarringInfo" to the radio network controller RNC and the radio network controller RNC is configured to transmit the barring information "Domain Specific Access Restriction" to the radio base station eNB, and thus it is possible to perform transition of a mobile station UE to a different RAT cell in consideration of access barring performed in the different RAT, so that it is possible to perform appropriate load distribution.

The characteristics of the present embodiment as described above may be expressed as follows.

A first characteristic of the present embodiment is summarized in that a mobile communication system includes: E-UTRAN (a first radio access network); and UTRAN (a second radio access network), wherein a radio base station eNB (a radio access network apparatus) in the EUTRAN is configured to transmit barring information for each communication type applied in the E-UTRAN to a radio network controller RNC (a radio access network apparatus) in the UTRAN, and the barring information includes a barring factor, a barring time, and information indicating whether there is any barring to a priority call.

A second characteristic of the present embodiment is summarized in that a radio base station eNB in E-UTRAN is configured to transmit barring information for each communication type applied in the E-UTRAN to a radio network controller RNC in UTRAN, and the barring information includes a barring factor, a barring time, and information indicating whether there is any barring to a priority call.

A third characteristic of the present embodiment is summarized in that a mobile communication system includes: E-UTRAN; and UTRAN, wherein a radio network controller RNC in the UTRAN is configured to transmit barring information applied in the UTRAN to a radio base station eNB in the E-UTRAN, and the barring information includes information indicating whether there is any barring to each access class in a circuit switched domain and a packet switched domain.

A fourth characteristic of the present embodiment is summarized in that a radio network controller RNC in UTRAN is configured to transmit barring information applied in the UTRAN to a radio base station eNB in E-UTRAN, and the barring information includes information indicating whether there is any barring to each access class in a circuit switched domain and a packet switched domain.

In addition, the operation of the mobile station UE, the radio base station eNB/NodeB, the radio network controller RNC, the mobile management node MME, or the packet switch SGSN may be performed by hardware, a software module performed by a processor, or a combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the mobile station UE, the radio base station eNB/NodeB, the radio network controller RNC, the mobile management node MME, or the packet switch SGSN. Furthermore, the storage medium and the processor may be arranged, as a discrete component, in the mobile station UE, the radio base station eNB/NodeB, the radio network controller RNC, the mobile management node MME, or the packet switch SGSN.

Thus, the present invention has been explained in detail by using the above-described embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

### [Industrial Applicability]

As described above, according to the present invention, it is possible to provide a mobile communication system and a radio access network apparatus, by which it is possible to exchange effective barring information between different types of RAT in order to perform load distribution.

### [Reference Signs List]

- UE: Mobile station
- eNB, NodeB: Radio base station
- RNC: Radio network controller
- MME: Mobile management node
- SGSN: Packet switch

## Claims

1. A mobile communication system comprising: a first radio access network; and a second radio access network, wherein
a radio access network apparatus in the first radio access network is configured to transmit barring information for each communication type applied in the first radio access network to a radio access network apparatus in the second radio access network, and
the barring information includes a barring factor, a barring time, and information indicating whether there is any barring to a priority call.

2. A radio access network apparatus in a first radio access network,
the radio access network apparatus being configured to transmit barring information for each communication type applied in the first radio access network to a radio access network apparatus in a second radio access network, wherein
the barring information includes a barring factor, a barring time, and information indicating whether there is any barring to a priority call.

3. A mobile communication system comprising: a first radio access network; and a second radio access network, wherein
wherein a radio access network apparatus in the second radio access network is configured to transmit barring information applied in the second radio access network to a radio access network apparatus in the first radio access network, and
the barring information includes information indicating whether there is any barring to each access class in a circuit switched domain and a packet switched domain.

4. A radio access network apparatus in a second radio access network,
the radio access network apparatus being configured to transmit barring information applied in the second radio access network to a radio access network apparatus in a first radio access network, wherein
the barring information includes information indicating whether there is any barring to each access class in a circuit switched domain and a packet switched domain.
